# EUROPEAN PATENT APPLICATION

(11) **EP 4 792 912 A2**
(43) Date of publication of application: **19.08.2026**
(21) Application number: 25224933.9
(22) Date of filing: 18.12.2025
(51) Int. Cl.: B01D 39/08

(54) **WATER-HOLDING FABRIC, FILTER, HUMIDIFIER AND METHOD FOR MANUFACTURING WATER-HOLDING FABRIC**

(30) Priority: 23.01.2025 CN 202510113581
(71) Applicant: Shenzhen Chenbei Technology Co., Ltd., Shenzhen, Guangdong 518000 (CN)
(72) Inventor: Zhu, DeHong, Shenzhen (CN)
(74) Representative: Bird & Bird LLP - Hamburg

(57) **Abstract**

Disclosed are a water-holding fabric, a filter, a humidifier, and a method for manufacturing a water-holding fabric. The water-holding fabric includes: at least two woven surfaces, being stacked and including a first woven surface and a second woven surface adjacent to each other; where the first woven surface includes a plurality of first air pores each being defined by a plurality of first weaving threads that are connected, and first loops being formed at joints of adjacent first weaving threads; and the second woven surface includes a plurality of second air pores, each of the second air pores being defined by a plurality of second weaving threads that are connected, and second loops being formed at joints of adjacent second weaving threads; and connecting threads extending from the first loops to the second loops to connect the first woven surface and the second woven surface.

## Description

### Technical Field

The present invention relates to a water-holding fabric, a filter, a humidifier, and a method for manufacturing a water-holding fabric.

### Background Art

With the improvement of living standards, people have increasing requirements on their daily home environment. Air quality, particularly the regulation of air humidity, has been a major concern in improving the home environment. An evaporative humidifier absorbs water via a filter screen, and an airflow generated by a fan flows through the filter to carry the water on the filter to external environment so as to humidify the environment.

The filter mainly functions to hold water. However, an existing filter usually cannot take into account both good airflow unobstructedness and good water-holding capacity, resulting in insufficient humidification effect, and accordingly, it is difficult to meet user needs.

### Summary

In view of this, in order to solve at least one of the foregoing technical problems, the present invention provides a water-holding fabric, a filter, a humidifier, and a method for manufacturing a water-holding fabric.

In order to achieve the objective described above, the present invention provides the following technical solutions.

In one aspect, the present invention provides a water-holding fabric, which includes:
at least two woven surfaces, the at least two woven surfaces being stacked and including a first woven surface (100) and a second woven surface (200) adjacent to each other;
where the first woven surface (100) includes a plurality of first air pores (101), each of the first air pores (101) being defined by a plurality of first weaving threads (110) that are connected, and first loops (102) being formed at joints of adjacent first weaving threads (110); and
the second woven surface (200) includes a plurality of second air pores (201), each of the second air pores (201) being defined by a plurality of second weaving threads (210) that are connected, and second loops (202) being formed at joints of adjacent second weaving threads (210); and
connecting threads (300) extending from the first loops (102) to the second loops (202) to connect the first woven surface (100) and the second woven surface (200).

Two connecting threads (300) extend from a single first loop (102) and/or a single second loop (202);
or no less than five of the connecting threads (300) extend from a single first loop (102) and/or a single second loop (202).

The connecting threads (300) extending from at least one of the first loops (102) extend toward the same second loop (202);
and/or the connecting threads (300) extending from at least one of the first loops (102) extend toward at least two different second loops (202).

At least some of the connecting threads (300) have a greater length between the first woven surface (100) and the second woven surface (200) than a distance between the first woven surface (100) and the second woven surface (200) such that the connecting threads (300) between the first woven surface (100) and the second woven surface (200) are curved;
and/or at least some of the connecting threads (300) extend linearly between the first woven surface (100) and the second woven surface (200).

Projections of the first air pore (101) and the second air pore (201) in a direction perpendicular to an extension surface of the first air pore (101) overlap;
and/or at least one of the first air pore (101) and the second air pore (201) is oval, rectangular or hexagonal.

At least one of the first weaving thread (110), the second weaving thread (210) and the connecting thread (300) includes a first filament;
at least some of the first filaments have first depressions on their surfaces;
the first depression extends in a length direction of the first filament;
or the first depression is a dot-shaped depression.

At least one of the first weaving thread (110), the second weaving thread (210) and the connecting thread (300) further includes:
a second filament made of a different material from the first filament;
and/or an antibacterial and mildew-proof composition, when a plurality of first filaments are provided, the antibacterial and mildew-proof composition being embedded between the first filaments;
and/or a hydrophilic factor, when a plurality of first filaments are provided, the hydrophilic factor being embedded between the first filaments.

In another aspect, the present invention further provides a filter including at least one water-holding fabric (10) according to any one of the foregoing implementations, and when a plurality of water-holding fabrics (10) are provided, the plurality of water-holding fabrics (10) being connected in a stacked manner or spaced apart.

In yet another aspect, the present invention further provides a humidifier, which includes the filter described above or at least one water-holding fabric (10) described above.

In still another aspect, the present invention further provides a method for manufacturing a water-holding fabric, the method including:
connecting first weaving threads to form a first woven surface having a plurality of first air pores, where each of the first air pores is defined by a plurality of first weaving threads that are connected, and adjacent first weaving threads are connected to form first loops;
connecting second weaving threads to form a second woven surface having a plurality of second air pores, where each of the second air pores is defined by a plurality of second weaving threads that are connected, and adjacent second weaving threads are connected to form second loops; and
introducing connecting threads to the second loops through the first loops to connect the first woven surface and the second woven surface.

According to the water-holding fabric, the filter, the humidifier and the method for manufacturing a water-holding fabric proposed in the present invention, the first air pores and the second air pores are provided to improve unobstructedness of airflow circulation and alleviate the problem of ineffective humidification due to the high resistance to airflow circulation, difficulty in propelling the airflow and insufficient flow rate caused by a water film on the water-holding fabric. Moreover, through the extension of the connecting threads between the first woven surface and the second woven surface, the contact between the connecting threads and the airflow provides a sufficient area for the contact between the airflow and water, which helps the airflow to carry sufficient moisture to achieve effective humidification. In the present application, since the connecting threads are located between the first loops each formed by two weaving threads and the second loops each formed by two weaving threads, the insufficient supporting force of the weaving threads caused by the connection to single weaving threads is improved. Therefore, the impact to airflow circulation from the water film produced due to the insufficient opening area of the first air pores and the second air pores caused by the deformation of the weaving threads by pulling of the connecting threads is overcome; the shape stability of the connecting threads extending between the first woven surface and the second woven surface is also improved, and the connecting threads may not pile up or curve to occupy an airflow passage between the first air pores and the second air pores due to the deformation of the weaving threads by pulling; and furthermore, the dislocation of the first air pores and the second air pores caused by the change in the overall shape of the water-holding fabric due to the deformation of the weaving threads by pulling is avoided, thus improving the effect of continuous humidification.

### Brief Description of the Drawings

Fig. 1 schematically shows a structural schematic diagram of a water-holding fabric;
Fig. 2 schematically shows a structural schematic partial diagram of a further water-holding fabric;
Fig. 3 schematically shows a structural schematic diagram of a connection method of connecting threads;
Fig. 4 schematically shows a structural schematic diagram of a further connection method of connecting threads;
Fig. 5 schematically shows a structural schematic diagram of a first air pore;
Fig. 6 schematically shows a structural schematic diagram of a further first air pore;
Fig. 7 schematically shows a structural schematic diagram of a filter;
Fig. 8 schematically shows a structural schematic diagram of a further filter; and
Fig. 9 schematically shows a flowchart of a method for manufacturing a water-holding fabric.

### Detailed Description of Embodiments

In order to further illustrate the technical means, adopted to achieve the intended inventive purpose, and the efficacy of the present invention, specific implementations, structures, features and efficacy of a water-holding fabric provided according to the present invention are described in detail below with respect to the accompanying drawings and embodiments.

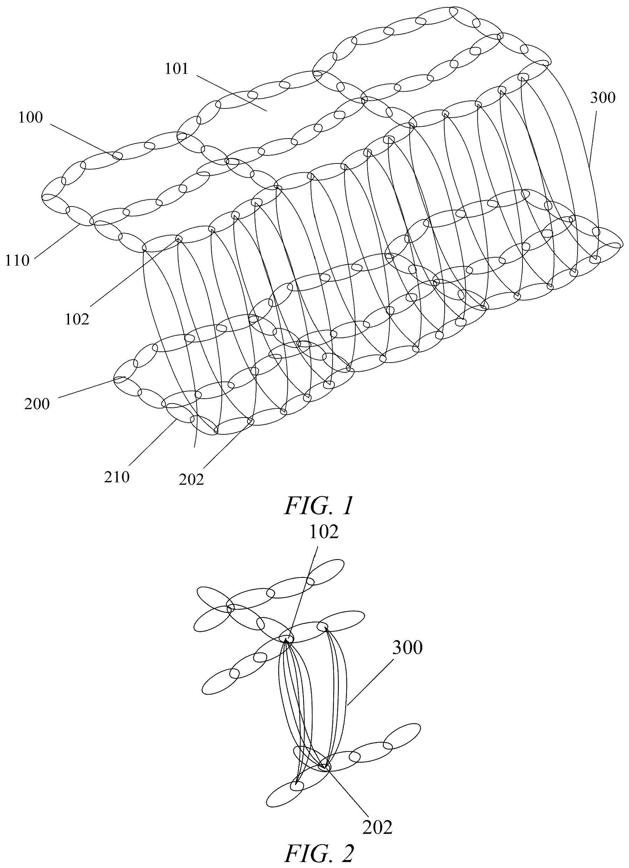

In one aspect, as shown in Figs. 1 to 6, an embodiment of the present invention provides a water-holding fabric (10), including:
at least two woven surfaces, the at least two woven surfaces being stacked and including a first woven surface (100) and a second woven surface (200) adjacent to each other;
where the first woven surface (100) includes a plurality of first air pores (101), each of the first air pores (101) being defined by a plurality of first weaving threads (110) that are connected in sequence or linked in a circle, and adjacent first weaving threads (110) being connected or linked to form first loops (102); and
the second woven surface (200) includes a plurality of second air pores (201), each of the second air pores (201) being defined by a plurality of second weaving threads (210) that are connected in sequence or linked in a circle, and adjacent second weaving threads (210) being connected or linked to form second loops (202); and
connecting threads (300) extending from the first loops (102) to the second loops (202) to connect the first woven surface (100) and the second woven surface (200).

The water-holding fabric (10) may be used in an evaporative humidifier and serve as a filter for the evaporative humidifier. In the evaporative humidifier, the water-holding fabric (10) is connected to a support, the water-holding fabric (10) is wet by a structure capable of supplying water to the water-holding fabric (10), such as a sprayer, and the water-holding fabric (10) will hold moisture. An airflow is provided to the water-holding fabric (10) by an airflow propulsion device, such as a blower. The airflow flows at least from one side to the other side of the water-holding fabric (10), and then passes through at least the water-holding fabric (10) and carries the moisture on the water-holding fabric (10) into the environment, so as to enhance humidification of the environment. Therefore, the airflow permeability and the water-holding capacity of the water-holding fabric (10) are two important factors for improving the humidification effect.

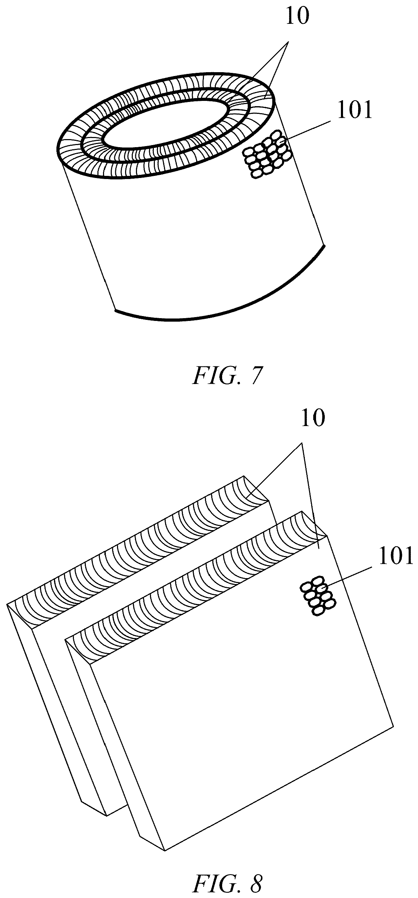

The woven surface has a certain thickness and is interwoven by weaving threads with a linear structure. As shown in Fig. 7, the woven surface may be a curved surface during use, and the woven surface may be defined as a cylinder. Alternatively, as shown in Fig. 8, the woven surface may be a flat surface. The water-holding fabric (10) may include a plurality of woven surfaces, and the structure of any of the woven surfaces may be the same or different. The plurality of woven surfaces are stacked and spaced apart. The distance between the woven surfaces may be uniform or nonuniform. The distance between the woven surfaces is increased by means of the connecting threads (300). There may be only two woven surfaces as shown in Fig. 1, including the first woven surface (100) and the second woven surface (200). Alternatively, in some other implementations, there may be more woven surfaces, which may be set according to needs. For example, in addition to the first woven surface (100) and the second woven surface (200) shown in Fig. 1, a third woven surface, a fourth woven surface, etc., are provided on a side of the first woven surface (100) facing away from the second woven surface (200). In the implementation where only the first woven surface (100) and the second woven surface (200) are included, if a higher water-holding capacity is required to achieve a better humidification effect, a plurality of water-holding fabrics (10) may be stacked closely in use as shown in Fig. 7, and the water-holding fabrics (10) are sewed along edges or fixed by, for example, fusion welding. Alternatively, the plurality of water-holding fabrics (10) may be spaced apart as shown in Fig. 8. The airflow passes through the respective water-holding fabrics (10) in sequence, and is in contact with the water on the different water-holding fabrics (10) a plurality of times, so that the moisture in the airflow is increased.

The plurality of first air pores (101) of the first woven surface (100) and the plurality of second air pores (201) of the second woven surface (200) are openings in the woven surfaces and are inlets and outlets for the airflow to pass through. The first air pores (101) and the second air pores (201) may be sized or shaped such that water is not easily stored therein, or that no water film will be formed on the first air pores (101) and the second air pores (201), and thus the first air pores (101) and the second air pores (201) only serve as passages, and the water-holding fabric (10) is improved with unobstructed airflow passages. The size or density of the first air pores (101) and the second air pores (201) may be set according to needs, such as depending on the airflow rate of the humidifier, the material of the first woven surface (100) and the second woven surface (200), and whether water used in the humidifier is doped with, for example, a fragrance agent which results in a change in the viscosity of water. This will be described later with respect to more specific implementations.

The first air pores (101) and the second air pores (201) are defined by weaving of filaments, and are densely arranged on the first woven surface (100) and the second woven surface (200). The weaving refers to connecting or linking of a plurality of weaving threads. The first air pore (101) is defined by a circle of first weaving threads (110), and the second air pore (201) is defined by a circle of second weaving threads (210). A plurality of first weaving threads (110) may be formed by continuously looping a single filament in a circle, and a plurality of second weaving threads (210) may be formed by continuously looping a single filament in a circle. As shown in Fig. 1, the first weaving threads (110) or the second weaving threads (210) are not used only for defining a single first air pore (101) or a single second air pore (201). In an example of the first weaving threads (110), adjacent sides of two adjacent first air pores (101) are formed of the same first weaving threads (110), i.e., at least some of the first weaving threads (110) are used for defining two adjacent first air pores (101). Alternatively, in some implementations, the first weaving threads (110) may be shared by more first air pores (101), such as three first air pores (101) or four first air pores (101).

Hereinafter, in an example of the first air pore (101), the first weaving thread (110) is of a loop structure defined by a strip-shaped filament. For ease of illustration, two adjacent first weaving threads (110) are referred to as a front weaving thread and a rear weaving thread respectively, the connection between the two adjacent first weaving threads (110) refers to that the front weaving thread and the rear weaving thread run across each other and then the rear weaving thread will take up part of an opening of the front weaving thread, and a space formed between the rear weaving thread and the front weaving thread within the opening of the front weaving thread is referred to as the first loop (102) described above. Alternatively, it can be seen that the first loop (102) is an area belonging to the opening of the front weaving thread and also an area belonging to an opening of the rear weaving thread, and accordingly is a common area for the front weaving thread and the rear weaving thread. A plurality of first weaving threads (110) may be formed by continuously looping a single filament in a circle, and a plurality of second weaving threads (210) may be formed by continuously looping a single filament in a circle.

The connecting threads (300) extend from the first loops (102) to the second loops (202), alternatively, they may extend from the second loops (202) to the first loops (102). The connecting threads (300) extend between the first woven surface (100) and the second woven surface (200), and the connecting threads (300) extend from the first loops (102) to the second loops (202) to function in supporting the distance between the first woven surface (100) and the second woven surface (200) and connecting the first woven surface (100) and the second woven surface (200). Importantly, the connecting threads (300) extend from the first loops (102) to the second loops (202) such that the water-holding fabric (10) achieves a water-holding effect. Expanding on this, in a first aspect, the connecting threads (300) extend from the first loops (102) to the second loops (202) to function in moisture transfer: the connecting threads (300) connect the first woven surface (100) and the second woven surface (200), and act as a bridge for moisture transfer between the first woven surface (100) and the second woven surface (200), so that moisture can be efficiently transferred from one of the first woven surface (100) and the second woven surface (200) to the other. This design allows moisture to be diffused and retained throughout the water-holding fabric (10) from a position, closest to or in contact with a source of water supply, of the water-holding fabric (10), so that the fabric will not lose its humidification capacity due to drying. In a second aspect, the connecting threads (300) extend from the first loops (102) to the second loops (202) to fix the first woven surface (100) and the second woven surface (200), alleviating the problem of uneven distribution of moisture caused by offset: the connecting threads (300) between the first loops (102) and the second loops (202) form a strong and direct connection, which combines the first woven surface (100) and the second woven surface (200) together more tightly. This connection reduces the relative movement of the first woven surface (100) and the second woven surface (200), improves offset caused by airflow, vibration, or changes in water pressure during use, achieves uniform distribution of moisture, and alleviates the problem of poor airflow circulation caused by the offset. In a third aspect, the connecting threads (300) serve to enhance the evaporation efficiency and improve the continuous water supply capacity of the water-holding fabric (10): as the connecting threads (300) extend from the first loops (102) to the second loops (202) to enhance the continuous flow of moisture between the first woven surface (100) and the second woven surface (200), the humidity of both the first woven surface (100) and the second woven surface (200) can be increased continuously, thereby expanding the evaporation area. The continuous water supply and relatively balanced moisture distribution enable more moisture to be effectively evaporated when the airflow passes through the water-holding fabric (10), thus enhancing the humidification effect. In a fourth aspect, the connecting threads (300) extend from the first loops (102) to the second loops (202) to serve to improve the overall strength of the fabric and enhance the overall structural stability: the connection form of the connecting threads (300) enhances the overall structural strength of the water-holding fabric (10). In an extended humidification process and air circulation, this strength may prevent the water-holding fabric (10) from being distorted or damaged due to the gravity of moisture and the airflow, and even in an environment with high humidity and strong airflow, the shape of the water-holding fabric (10) when it works efficiently may still be maintained to a certain extent by the connection method of the connecting threads (300); moreover, the deformation of the water-holding fabric (10) caused by pulling during brushing, mounting and removal of the water-holding fabric (10) may be avoided, thereby improving durability and reducing the risk of wear and diminished humidification effectiveness. The stable structure contributes to maintaining long-term performance of the humidifier.

Under the action of an external wind component such as a blower, a centrifugal fan and an axial-flow fan, the airflow passes through the first air pores (101) and the second air pores (201) and comes into contact with the moisture on the connecting threads (300) between the first air pores (101) and the second air pores (201), so that the pressure loss of the airflow passing through the first woven surface (100) and the second woven surface (200) is reduced, and the noise caused by the impact of the airflow on the first woven surface (100) and the second woven surface (200) is reduced. Besides, as the connecting threads (300) hold a considerable amount of moisture, the moisture contact area in a flow path of the airflow is increased, the contact efficiency of the airflow with water is improved, and the airflow will have sufficient humidity after flowing through the water-holding fabric (10). The connecting threads (300) themselves will hold water. Since a plurality of connecting threads (300) are provided and a water film will be formed between the connecting threads (300), the amount of water that can be contacted by the airflow is further increased, greatly increasing the water-holding efficiency.

The connecting threads (300) may be connected by various methods. For example, a single connecting thread (300) runs or passes through a first loop (102) to form two connecting threads (300) introduced through the first loop (102); and a single connecting thread (300) runs or passes through a second loop (202) to form two connecting threads (300) introduced through the second loop (202). As shown in Fig. 1, it is possible that a connection is made by the connecting thread (300) sequentially passing through a previous first loop (102), a previous second loop (202), a following first loop (102), and a following second loop (202), thus achieving easy weaving and high structural strength. In some other implementations, it is also possible that the connecting thread (300) is introduced through the first loop (102) or the second loop (202) by bonding. As in the foregoing implementation in which the connecting thread (300) passes through the first loop (102), only an even number of connecting threads (300) can be introduced through the first loop (102), whereas an odd or even number of connecting threads (300) can be introduced through the first loop (102) by bonding, such as ultrasonic welding.

In addition, the first loop (102) is not formed by linking only two first weaving threads (110), but may be formed by linking three or more first weaving threads (110) depending on the position, and a plurality of first weaving threads (110) may be formed by continuously looping a single filament in a circle. As shown in Fig. 2, a first loop (102) is formed by linking three first weaving threads (110). The connecting threads (300) pass through the first loops (102) to improve the connection and support of the first woven surface (100) and the second woven surface (200), instead of being connected to the first weaving threads (110). The structure in which two or more first weaving threads (110) are linked to each other to form the first loop (102) is more stable, and can provide a stronger support to the connecting threads (300). The stress on an edge of the first loop (102) is as a joint stress of two or even more first weaving threads (110), and accordingly, the shape of the first loop (102) is not easy to change, the stability of the shape and area of the first air pore (101) and the shape of the connecting threads (300) can be improved, and the preset air permeability as well as the water-holding capacity can be increased and will not undergo a significant decline after long-term use. It can be understood that the connecting threads (300) have the same advantages over the second loops (202) and the second weaving threads (210) as analyzed previously.

It is worth noting that, in order to make the diagrams show the structure more clearly, only a part of the structure is shown in Figs. 1 to 4 of the present application, and only some of the connecting threads (300) are drawn therein, while the rest of the connecting threads (300) can be set with reference to the part shown, thus forming a complete water-holding fabric (10).

According to the water-holding fabric, the filter and the humidifier proposed in the embodiments of the present invention, by providing the first air pores (101) and the second air pores (201), and using the connecting threads (300) to extend between the first air pores (101) and the second air pores (201), the connecting threads (300) extend from the first loops (102) to the second loops (202) to fix the first woven surface (100) and the second woven surface (200), thus improving the unobstructedness of airflow circulation, and alleviating the problem of high resistance to airflow circulation due to the water film on the water-holding fabric, and alleviating the problem of ineffective humidification due to the difficulty in propelling the airflow and the insufficient flow rate. Moreover, through the extension of the connecting threads between the first woven surface and the second woven surface, the contact between the connecting threads and the airflow provides a sufficient area for the contact between the airflow and water, which helps the airflow to carry sufficient moisture to achieve effective humidification. In the present application, since the connecting threads are located between the first loops and second loops each formed by two weaving threads, the insufficient supporting force of the weaving threads caused by the connection to single weaving threads is improved. Therefore, the impact to airflow circulation from the water film produced due to the insufficient opening area of the first air pores and the second air pores caused by the deformation of the weaving threads by pulling of the connecting threads is overcome; the shape stability of the connecting threads extending between the first woven surface and the second woven surface is also improved, and the connecting threads may not pile up or curve to occupy an airflow passage between the first air pores and the second air pores due to the deformation of the weaving threads by pulling; and furthermore, the dislocation of the first air pores and the second air pores caused by the change in the overall shape of the water-holding fabric due to the deformation of the weaving threads by pulling is avoided, thus improving the effect of continuous humidification.

In an implementation, two connecting threads (300) extend from a single first loop (102) and/or a single second loop (202). For example, the connecting thread (300) may be connected in such a manner that a single connecting thread (300) passes through the first loop (102) and the second loop (202) as shown in Fig. 1. Alternatively, in some other implementations, there may be no less than 5 connecting threads (300) extending from a single first loop (102) and/or a single second loop (202), such as 5, 6, or more connecting threads, and accordingly the number of connecting threads (300) is greater, the connecting threads (300) are denser, and it is easier to form the water film between the connecting threads (300), so that the amount of water that can be held by the connecting threads (300) is greatly increased, the contact area between the airflow and the moisture is increased, and the humidification efficiency is improved with a limited volume of water-holding fabric. The number of connecting threads (300) may be set according to the ventilation situation. For example, when the air flow rate is small or the fan gear is low and the rotational speed is relatively small, for a single first loop (102) and/or a single second loop (202), the number of connecting threads (300) extending therefrom is no more than 30, thus alleviating the problem of obstruction of airflow circulation because the excessive connecting threads (300) expand into an airflow passage between the first air pores (101) and the second air pores (201). Furthermore, the number of connecting threads (300) may be set according to the thickness. For example, when the connecting threads (300) are thicker, the diameter of the threads is ≥ 80 µm, and accordingly, by controlling the number of connecting threads (300) to be less than 20, it helps to alleviate the problem that the number of first air pores (101) and second air pores (201) in a limited area is reduced because the first loops (102) and/or the second loops (202) are too large. It also helps to alleviate the problem that the moisture held on the connecting threads (300) cannot be used fully due to a small contact area between the airflow and a single connecting thread (300) caused by overcrowding of the connecting threads (300).

The number of first loops (102) and second loops (202) may be the same and may be set in correspondence, or the number of first loops (102) and second loops (202) may be different. It may be that each first loop (102) has a connecting thread (300) connected therein, or some of the first loops (102) have a connecting thread (300) connected therein. For example, a previous first loop (102) has a connecting thread (300) connected therein, one or a plurality of first loops (102) spaced apart in the middle have no connecting thread (300) connected therein, and a following first loop (102) has a connecting thread (300) connected therein. Such an arrangement may reduce the number of connections, and reduce the difficulty in weaving. Besides, the density of the connecting threads (300) may be adjusted on the basis of the number of the connecting threads (300) connected in the first loops (102). For the second loops (202), each of the second loops (202) may have a connecting thread (300) connected therein, or some of the second loops (202) may have a connecting thread (300) connected therein. Examples of several connection methods are given below, and it can be understood that the following connection methods may be used in combination.

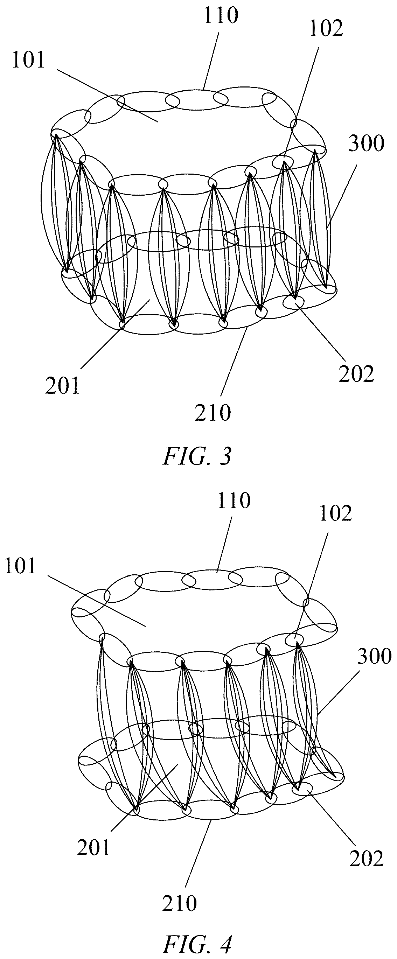

The connection of the connecting threads (300) between the first loops (102) and the second loops (202) may be shown in Fig. 3. For any of the connecting threads (300), the connecting thread (300) extending from at least one of the first loops (102) extends toward the same second loop (202), i.e., the connecting thread (300) runs between the current first loop (102) and the current second loop (202) repeatedly, forming a plurality of connecting threads (300) passing from the first loop (102) to the second loop (202). With such a connection method, the misalignment of the first woven surface (100) and the second woven surface (200) can be overcome through the restriction of the connecting threads (300), i.e., by this connection method, the relative position of the first woven surface (100) and the second woven surface (200) can be fixed effectively.

It may also be that the connecting threads (300) extending from at least one of the first loops (102) extend toward at least two different second loops (202). Alternatively, the connecting threads (300) extending from at least two first loops (102) extend toward the same second loop (202). As shown in Fig. 4, by the way that the connecting threads (300) extending from a first loop (102) extend toward two different second loops (202) and the connecting threads (300) extending from the same second loop (202) extend into two first loops (102), the number of the connecting threads (300) may be controlled to adjust the spacing between the connecting threads (300), and tiny gaps are formed between the connecting threads (300) to achieve the effect of capillary suction so as to realize uniform distribution of moisture while realizing continuous transfer of moisture. Moreover, the extension length of the connecting threads (300) may be increased, which boosts the water-holding capacity of a single connecting thread (300); and the reasonable setting of the spacing between the connecting threads (300) helps to enhance the water film between the connecting threads (300), thus further increasing the water-holding capacity of the connecting threads (300).

In addition, it may also be that the connecting threads (300) extending from the first loop (102) extend toward more second loops (202), such as three second loops.

In an implementation, at least some of the connecting threads (300) have a greater length between the first woven surface (100) and the second woven surface (200) than a distance between the first woven surface (100) and the second woven surface (200) such that the connecting threads (300) between the first woven surface (100) and the second woven surface (200) are curved. The curved form of the connecting thread (300) can increase the length of a single connecting thread (300), which increases the water-holding capacity of the connecting thread (300) itself. It can be viewed as a circulation path of the airflow between the first air pore (101) and the second air pore (201) being a curved path, which is a longer path and brings more opportunities for contact with water, thus further increasing the water-holding capacity of the airflow. Moreover, the area of the water film formed between adjacent connecting threads (300) may be increased, which further increases the total water-holding capacity of the plurality of connecting threads (300). The connecting thread (300) may be curved as an arc, or in some implementations, the connecting thread (300) may be alternately curved in a plurality of directions, and the connecting thread (300) may be helically coiled, such as in the shape of a spring, so that the water-holding capacity of the connecting thread (300) can be further increased.

Alternatively, at least some of the connecting threads (300) extend linearly between the first woven surface (100) and the second woven surface (200), so that the air permeability between the first air pores (101) and the second air pores (201) can be increased, and the difficulty in weaving the connecting threads (300) can be reduced.

In an implementation, the number of the first air pores (101) and the second air pores (201) is the same, forming passages where the first air pores (101) correspond to the second air pores (201). The number of the first air pores (101) and the second air pores (201) may be different, where one first air pore (101) may correspond to a plurality of second air pores (201) to form a passage, or a plurality of first air pores (101) may correspond to a single second air pore (201) to form a passage. The size of the first air pores (101) and the second air pores (201) may be the same or may be different. For example, it may be that the first air pore (101) is at the front end of a flow direction of the airflow and the size of the first air pore (101) is smaller than that of the second air pore (201), alleviating the problem that the water film is formed on the second air pore (201) due to blocking of the airflow with high moisture at the second air pore (201). Alternatively, it may also be that the size of the first air pore (101) is larger than that of the second air pore (201), so that the airflow passage between the first air pore (101) and the second air pore (201) has a tendency of tightening, which increases the pressure from the airflow onto the connecting thread (300) between the first air pore (101) and the second air pore (201), increases the contact strength between the airflow and moisture on the connecting thread (300) and makes it easy for the airflow to carry the moisture.

The relative position of the first air pore (101) and the second air pore (201) may be various. For example, the surface where the first air pore (101) is located may be approximated as a plane, projections of the first air pore (101) and the second air pore (201) at least partially overlap in a direction perpendicular to the plane where the first air pore (101) is located, and the projections with a high degree of overlap provide the airflow with a passage perpendicular to the plane where the first air pore (101) is located, thus improving the unobstructedness of airflow circulation. Alternatively, it may also be that the projections of the first air pore (101) and the second air pore (201) in the direction perpendicular to an extension surface of the first air pore (101) partially overlap with each other, i.e., the first air pore (101) and the second air pore (201) are staggered to provide the airflow with a passage that is inclined to the plane where the first air pore (101) is located. Therefore, under the limitation on the distance between the first woven surface (100) and the second woven surface (200), the length of the airflow passage is increased, the length of the connecting thread (300) is extended, and the contact time between the airflow and the connecting thread (300) is prolonged, so that the water-holding capacity of the airflow is increased.

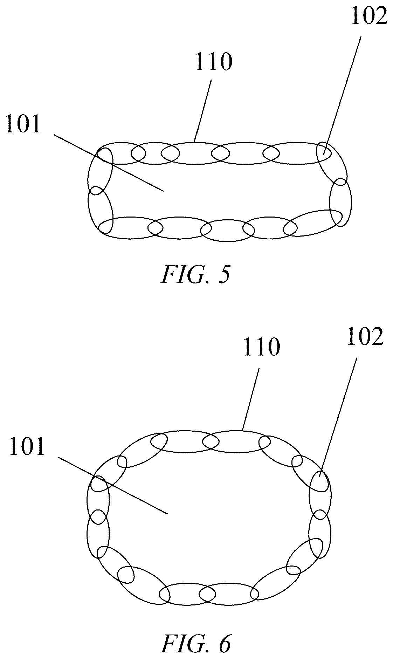

The first air pore (101) and the second air pore (201) may have various shapes. The first air pore (101) and the second air pore (201) may be regular circular, oval, triangular or polygonal, or the first air pore (101) and the second air pore (201) may have an irregular shape. For example, at least one of the first air pore (101) and the second air pore (201) has an irregular oval shape, or may have an irregular rectangular shape as shown in Fig. 5, or an irregular hexagonal shape as shown in Fig. 6, where the irregular hexagonal shape may be referred to as a hexagonal-like shape. Openings of the plurality of first air pores (101) and the plurality of second air pores (201) may be of different shapes, e.g., may be a combination of a hexagon and a triangle.

The size of the different first air pores (101) and second air pores (201), the density of the connecting threads (300), and the thickness of the water-holding fabric (10) do not exist independently and interact with one another, which constrain the water-holding capacity and the water-holding effect after airflow circulation collaboratively. The present application provides the following specific data for reference, and the following data collaboratively achieves a good humidification effect:
the first air pore (101) or the second air pore (201) is in the shape of a hexagon, the length of a long diagonal of the hexagon is greater than or equal to 3 mm and less than or equal to 5 mm, and the length of a short diagonal of the hexagon is greater than or equal to 2 mm and less than or equal to 3 mm. If the air pore is in the shape of a polygon, the diagonal refers to a line segment connecting any two non-adjacent vertices in the polygon, the short diagonal refers to a shortest line segment between any two non-adjacent vertices, and the long diagonal refers to a line segment between any two non-adjacent vertices that is longer than the short diagonal. If the air pore is in the shape of a circle or an oval, the diagonal refers to a line segment connecting any two points on the circle. A chord may be viewed as a "diagonal" of a circle, where the long diagonal refers to a longest chord, i.e., the diameter, of the circle or oval, and the short diagonal refers to a line segment between any two points that is shorter than the long diagonal. The water-holding fabric (10) has a thickness greater than or equal to 3 mm and less than or equal to 8 mm. The density of the connecting threads (300) includes a warp density greater than or equal to 30 threads per inch and less than or equal to 36 threads per inch, and a weft density greater than or equal to 24 threads per inch and less than or equal to 26 threads per inch. When a plurality of water-holding fabrics (10) are stacked in use, the number of layers of the water-holding fabrics (10) is less than 4, thus alleviating the problem of excessive wind resistance caused by the superposition of positional differences between layers when the number of layers is too large.

The individual fibers to be spun into a weaving thread are referred to as filaments. At least one of the first weaving thread (110), the second weaving thread (210) and the connecting thread (300) includes a first filament. In an example of the first weaving thread (110), it can be understood that the following characterization of the filament in the first weaving thread (110) is applicable to that in the second weaving thread (210) and the connecting thread (300). The first weaving thread (110) may be compactly spun with a plurality of first filaments densely, such as 140 to 150 first filaments. In an implementation, at least some of the first filaments have first depressions on their surfaces, each of the first depressions may be a depression extending in a length direction of the first filament, or may be a depression extending in a circumferential or random direction, and the depression may be a narrow fine line or a wide groove. For example, a first depression extending in the length direction of the first filament may be provided on each side of the first filament in the circumferential direction, so that the first filament in the length direction may have a special-shaped cross-section, such as a triangle with each side concave inwardly or a square with each side concave inwardly. This helps to increase the area of a water-holding surface of the first filament, and can achieve effective water holding, increase the contact area between the airflow and water, and improve the humidification efficiency. The first depression may not be a bar-shaped depression, but a dot-shaped depression, which makes the first filament have an uneven rough surface. The rough surface may be formed by physical deposition on the surface of the first filament, so that the first filament has the uneven surface, which helps to increase the area of the water-holding surface, and can achieve effective water holding, increase the contact area between the airflow and the water, and improve the humidification efficiency. The height difference between a protrusion of the rough surface and a concave portion may be above 0 µm and below 100 µm.

It may be that the first depressions of the first filaments included in different first weaving threads (110) have the same shape, for example, the first weaving threads (110) are composed of the first filaments having the same cross-section shape. However, the first filaments may have different degrees of softness and hardness due to the first depressions at different positions. In order to increase the strength of the edge of the first air pore (101) while achieving a good water-holding capacity, the first depressions of the first filaments included in different first weaving threads (110) may have different shapes, i.e., the different first weaving threads (110) may be spun with first filaments having different cross-section shapes. The first depressions of different first filaments in the same first weaving thread (110) have the same or different shapes, i.e., the first weaving thread (110) may be compactly spun with a plurality of first filaments having the same cross-section shape, or the first weaving thread (110) may be compactly spun with a plurality of first filaments having different cross-section shapes.

In an implementation, the first weaving thread (110) further includes a second filament made of a different material from the first filament. The material of the filament may be softer, which has better formability, or it may be harder, which has good structural strength and is less prone to deformation after long-term use. The filament itself may have good water absorbency, e.g., it may be made of a cotton material, which improves the water-holding capacity. Alternatively, the filament itself may be non-absorbent, and the water-holding capacity is improved relying on the surface depressions or roughness, thus scale accumulation in the filament is reduced. The strength and water absorbency of the first weaving thread (110) can be changed by mixing a variety of different filaments according to needs. For example, the first filament may be non-absorbent and capable of holding water only at its surface, while the second filament may absorb water; or the hardness of the first filament may be greater than the hardness of the second filament.

In some implementations, the first weaving thread (110) further includes an antibacterial and mildew-proof composition embedded between the first filaments or between the first filaments and the second filaments. That is, when a plurality of first filaments or the first filaments and the second filaments are spun together to form the first weaving thread (110), the antibacterial and mildew-proof composition is added to be combined and spun with the first and second filaments. The embedded addition of the composition overcomes the disadvantages that the antibacterial and mildew-proof composition coated after the formation of the first weaving thread (110) easily falls off and that the work process is cumbersome.

In some implementations, the first weaving thread (110) further includes a hydrophilic factor embedded between the first filaments or between the first filaments and the second filaments. That is, the hydrophilic factor is added when a plurality of first filaments or the first filaments and the second filaments are spun together to form the first weaving thread (110), e.g., poly (butyl acrylate), methyl methacrylate and the like may be added during the weaving process. The embedded addition of the composition overcomes the disadvantages that the hydrophilic layer coated after the formation of the first weaving thread (110) easily falls off and that the work process is cumbersome.

In addition, if the connecting thread (300) may include only a single first filament, the method of coating the antibacterial and mildew-proof composition and the hydrophilic factor may be used to improve the performance of the connecting thread (300).

The water-holding fabric (10) may be of various colors, e.g., it may be non-white, such as grey, light brown, yellow, and blue. It is not easy to find scale and other debris deposited on the water-holding fabric (10), and accordingly the water-holding fabric is less prone to discoloring after long-term use, and the impact to the appearance due to irregular color and yellowing of the water-holding fabric (10) caused by scale accumulation is overcome.

In another aspect, the present invention further provides a filter, including at least one water-holding fabric (10) according to any one of the foregoing implementations, one or more water-holding fabrics (10) may be provided according to needs, and the water-holding fabric (10) may be defined as a cylinder as shown in Fig. 7, or may be flattened as shown in Fig. 8. When a plurality of water-holding fabrics (10) are used, the plurality of water-holding fabrics (10) may be densely connected as shown in Fig. 7 and fixed by edge sewing, and may be sleeved over a single holder integrally. Alternatively, the water-holding fabrics may be spaced apart as in Fig. 8, each using a fixing device.

The filter includes the water-holding fabric (10) in any of the foregoing implementations, and has the advantages of the water-holding fabric (10) in any of the foregoing implementations, which will not be repeated herein.

In yet another aspect, the present application further provides a humidifier including the filter as described above, a support, a water supply mechanism, and an airflow propulsion mechanism, where the filter is connected to the support, and the water supply mechanism supplies water to a water-holding fabric (10) of the filter by a sprayer or the like, so that the water-holding fabric (10) holds water. The airflow propulsion mechanism provides an airflow to the water-holding fabric (10) by a blower and the like. The airflow flows from one side to the other side of the water-holding fabric (10), and then passes through the water-holding fabric (10) and carries the moisture on the water-holding fabric (10) into the environment, so as to enhance humidification of the environment.

The humidifier includes at least one filter in any of the above embodiments and has the advantages of any of the filters as described above, which will not be repeated herein.

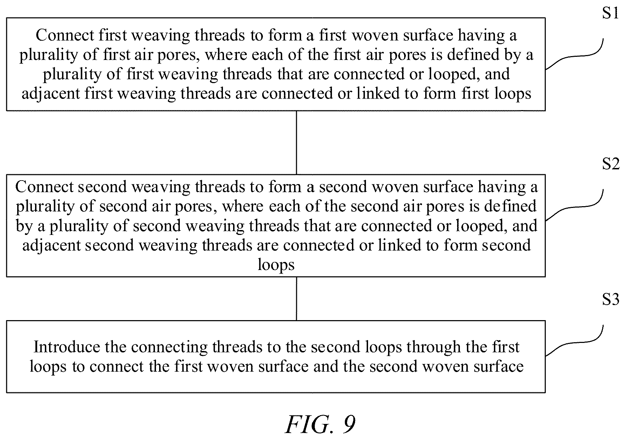

In still yet another aspect, as shown in Fig. 9, the present invention further provides a method for manufacturing a water-holding fabric, which may be used for manufacturing and forming a water-holding fabric according to any of the foregoing implementations, the method including the following steps.

In step S1, first weaving threads (110) are connected to form a first woven surface (100) having a plurality of first air pores (101), where each of the first air pores (101) is defined by a plurality of first weaving threads (110) that are connected or looped, and adjacent first weaving threads (110) are connected or linked to form first loops (102).

In step S2, second weaving threads (210) are connected to form a second woven surface (200) having a plurality of second air pores (201), where each of the second air pores (201) is defined by a plurality of second weaving threads (210) that are connected or looped, and adjacent second weaving threads (210) are connected or linked to form second loops (202).

At least one of the first weaving thread (110) and the second weaving thread (210) is a yarn composed of a single or a plurality of first filaments. In some implementations, at least one of the first weaving thread (110) and the second weaving thread (210) further includes a second filament made of a material different from that of the first filament, a hydrophilic factor and/or an antibacterial and mildew-proof composition, and the second filament, the hydrophilic factor and/or the antibacterial and mildew-proof composition are spun together with the first filament to form the first weaving thread (110) and/or the second weaving thread (210). The first woven surface (100) and the second woven surface (200) may be formed in the same way. In an example of the first woven surface (100), yarns can be formed into loops by means of a netting machine to form the first weaving threads (110), and the first weaving threads (110) are connected or linked in sequence to form the first woven surface (100) having a plurality of first air pores (101). The size of the first air pore (101) can be changed by changing the length of the first weaving threads (110) or the number of first weaving threads (110) defining the first air pore (101), and the shape of the first air pore (101) can be changed based on the connection relationship and positions of the plurality of first weaving threads (110), so that the problem that there will be no water film or it is difficult to form the water film on the first air pore (101) and the second air pore (201) can be alleviated. As shown in Fig. 1, the first weaving threads (110) or the second weaving threads (210) are not used only for defining a single first air pore (101) or a single second air pore (201). In an example of the first weaving threads (110), adjacent sides of two adjacent first air pores (101) are formed of the same first weaving threads (110), i.e., at least some of the first weaving threads (110) are used for defining two adjacent first air pores (101). Alternatively, in some implementations, the first weaving threads (110) may be shared by more first air pores (101), such as three first air pores (101) or four first air pores (101).

Two adjacent first weaving threads (110), as well as adjacent second weaving threads (210), are connected or linked to each other, and holes are formed at joints by means of connecting or linking. In an example of the first air pore (101), for ease of illustration, two adjacent first weaving threads (110) are referred to as a front weaving thread and a rear weaving thread respectively, and the linking between the two adjacent first weaving threads (110) refers to that the front weaving thread and the rear weaving thread run across each other, and then the rear weaving thread will take up part of an opening of the front weaving thread, and a space formed, between the rear weaving thread and the front weaving thread, within the opening of the front weaving thread, is referred to as the first loop (102) described above. Alternatively, it can be seen that the first loop (102) is an area belonging to the opening of the front weaving thread and also an area belonging to an opening of the rear weaving thread, and accordingly is a common area for the front weaving thread and the rear weaving thread. In addition, the first loop (102) is not formed by linking only two first weaving threads (110), but may be formed by linking three or more first weaving threads (110) depending on the position. As shown in Fig. 2, three first weaving threads (110) are linked to form the first loop (102).

The above weaving process may form only the first woven surface (100) and the second woven surface (200). Alternatively, more woven surfaces may be formed, such as a third woven surface, a fourth woven surface, and a fifth woven surface.

In step S3, the connecting threads (300) are introduced to the second loops (202) through the first loops (102) to connect the first woven surface (100) and the second woven surface (200).

The connecting thread (300) is a yarn formed by a single or a plurality of first filaments. In some implementations, the connecting thread (300) further includes a second filament made of a material different from that of the first filament, a hydrophilic factor and/or an antibacterial and mildew-proof composition, and the second filament, the hydrophilic factor and/or the antibacterial and mildew-proof composition are spun together with the first filament to form the connecting thread (300).

After the first woven surface (100) and the second woven surface (200) or even more woven surfaces are formed, the plurality of woven surfaces are stacked and connected each other. For example, if the woven surface includes only the first woven surface (100) and the second woven surface (200), the first woven surface (100) and the second woven surface (200) are stacked and spaced apart, and the distance between the first woven surface (100) and the second woven surface (200) may be uniform or nonuniform, where the distance may be determined according to the humidification demand, the viscosity of water, the size of meshes, and the number of connecting threads (300), and the like. The way in which the connecting threads (300) extend from the first loops (102) to the second loops (202) may be various. For example, it may be that a single connecting thread (300) runs or passes through a first loop (102) to form two connecting threads (300) introduced through the first loop (102), and a single connecting thread (300) runs or passes through a second loop (202) to form two connecting threads (300) introduced through the second loop (202). As shown in Fig. 1, it is possible that a connection is made by the connecting thread (300) sequentially passing through a previous first loop (102), a previous second loop (202), a following first loop (102) and a following second loop (202), that is, a plurality of first loops (102) and second loops (202) can be connected by using only a single connecting thread (300). The entire first woven surface (100) and the second woven surface (200) can be connected by only one connecting thread (300), or a certain number of first air pores (101) and second air pores (201) can be connected by one connecting thread (300), e.g., every ten rows of first air pores (101) can be connected by a single connecting thread (300). The number of times the connecting thread (300) passes through the first loop (102) and the second loop (202) is reduced by the way of threading of the connecting thread (300), thus achieving a simple structure, easy weaving and manufacturing, and low costs. In some other implementations, it is also possible that the connecting thread (300) is introduced through the first loop (102) or the second loop (202) by bonding. As in the foregoing implementation in which the connecting thread (300) passes through the first loop (102), only an even number of connecting threads (300) can be introduced through the first loop (102), whereas an odd or even number of connecting threads (300) can be introduced through the first loop (102) by bonding, such as ultrasonic welding.

The connecting threads (300) pass through the first loops (102) and the second loops (202) to connect the first woven surface (100) and the second woven surface (200) and support the distance between the first woven surface (100) and the second woven surface (200), instead of being connected to the first weaving threads (110). The structure in which two or more first weaving threads (110) are connected or linked to each other to form the first loops (102) is more stable, and can provide a stronger support to the connecting threads (300). The stress on the edge of the first loop (102) is as a joint stress of two or even more first weaving threads (110), and accordingly, the shape of the first loop (102) is not easy to change, the stability of the shape and area of the first air pore (101) and the shape of the connecting threads (300) can be improved, and the preset air permeability as well as the water-holding capacity can be increased and will not undergo a significant decline after long-term use. It can be understood that the connecting threads (300) have the same advantages over the second loops (202) and the second weaving threads (210) as analyzed previously.

In the implementation of the present application, as the connecting threads (300) are provided between the first woven surface (100) and the second woven surface (200) to connect the two and support therebetween, in a first aspect, the connecting threads (300) extending to the second loops (202) from the first loops (102) function in moisture transfer: the connecting threads (300) extend from the first loops (102) to the second loops (202) to connect the first woven surface (100) and the second woven surface (200), and act as a bridge for moisture transfer between the first woven surface (100) and the second woven surface (200), so that moisture can be efficiently transferred from one of the first woven surface (100) and the second woven surface (200) to the other. This design allows moisture to be diffused and retained throughout the water-holding fabric (10) from a position, closest to or in contact with a source of water supply, of the water-holding fabric (10), so that the problem that the fabric loses its humidification capacity due to drying is alleviated. In a second aspect, the connecting threads (300) serve to enhance the evaporation efficiency and improve the continuous water supply capacity of the water-holding fabric (10): with the connecting threads (300), the continuous flow of moisture between the first woven surface (100) and the second woven surface (200) is realized, and the humidity of both the first woven surface (100) and the second woven surface (200) can be increased continuously, thereby expanding the evaporation area. The continuous water supply and relatively balanced moisture distribution enable more moisture to be effectively evaporated when the airflow passes through the water-holding fabric (10), thus enhancing the humidification effect. In a third aspect, the connecting threads (300) serve to improve the overall strength of the fabric and enhance the overall structural stability: the connection form of the connecting threads (300) enhances the overall structural strength of the water-holding fabric (10). In an extended humidification process and air circulation, this strength may prevent the water-holding fabric (10) from being distorted or damaged due to the gravity of moisture and the airflow, and even in an environment with high humidity and strong airflow, the shape of the water-holding fabric (10) when it works efficiently may still be maintained to a certain extent by the connection method of the connecting threads (300); moreover, the deformation of the water-holding fabric (10) caused by pulling during brushing, mounting and removal of the water-holding fabric (10) may be avoided, thereby improving durability and reducing the risk of wear and diminished humidification effectiveness. The stable structure contributes to maintaining long-term performance of the humidifier. In a fourth aspect, the first woven surface (100) and the second woven surface (200) are fixed, alleviating the problem of uneven distribution of moisture caused by offset: the connecting threads (300) between the first loops (102) and the second loops (202) form a strong and direct connection, which combines the first woven surface (100) and the second woven surface (200) together more tightly. This connection reduces the relative movement of the first woven surface (100) and the second woven surface (200), alleviates the problem of offset caused by airflow, vibration, or changes in water pressure during use, achieves uniform distribution of moisture, and helps to alleviates the problem of poor airflow circulation caused by the offset.

The foregoing descriptions are merely specific implementations of the present invention, but the protection scope of the present invention is not limited thereto. Any modification or replacement easily conceived by a person skilled in the art within the technical scope of the present invention should fall within the protection scope of the present invention. Therefore, the protection scope of the present invention shall be the protection scope of the claims.

## Claims

1. A water-holding fabric, **characterized in that** the water-holding fabric (10) comprises:
at least two woven surfaces, the at least two woven surfaces being stacked and comprising a first woven surface (100) and a second woven surface (200) adjacent to each other;
wherein the first woven surface (100) comprises a plurality of first air pores (101), each of the first air pores (101) being defined by a plurality of first weaving threads (110) that are connected, and first loops (102) being formed at joints of adjacent first weaving threads (110); and
the second woven surface (200) comprises a plurality of second air pores (201), each of the second air pores (201) being defined by a plurality of second weaving threads (210) that are connected, and second loops (202) are formed at joints of adjacent second weaving threads (210); and
connecting threads (300) extending from the first loops (102) to the second loops (202) to connect the first woven surface (100) and the second woven surface (200).

2. The water-holding fabric of claim 1, **characterized in that**
two of the connecting threads (300) extend from a single first loop (102) and/or a single second loop (202);
or no less than five of the connecting threads (300) extend from a single first loop (102) and/or a single second loop (202).

3. The water-holding fabric of claim 1, **characterized in that**
the connecting threads (300) extending from at least one of the first loops (102) extend toward the same second loop (202);
and/or the connecting threads (300) extending from at least one of the first loops (102) extend toward at least two different second loops (202).

4. The water-holding fabric of claim 1, **characterized in that**
at least some of the connecting threads (300) have a greater length between the first woven surface (100) and the second woven surface (200) than a distance between the first woven surface (100) and the second woven surface (200) such that the connecting threads (300) between the first woven surface (100) and the second woven surface (200) are curved;
and/or at least some of the connecting threads (300) extend linearly between the first woven surface (100) and the second woven surface (200).

5. The water-holding fabric of claim 1, **characterized in that**
projections of the first air pore (101) and the second air pore (201) in a direction perpendicular to an extension surface of the first air pore (101) overlap or partially overlap with each other;
and/or at least one of the first air pore (101) and the second air pore (201) is oval, rectangular or hexagonal.

6. The water-holding fabric of claim 1, **characterized in that**
at least one of the first weaving thread (110), the second weaving thread (210) and the connecting thread (300) comprises a first filament;
the first filament has a first depression on its surface;
the first depression extends in a length direction of the first filament;
or the first depression is a dot-shaped depression.

7. The water-holding fabric of claim 1, **characterized in that**
at least one of the first weaving thread (110), the second weaving thread (210) and the connecting thread (300) further comprises:
a second filament made of a different material from the first filament;
and/or an antibacterial and mildew-proof composition, when a plurality of first filaments are provided, the antibacterial and mildew-proof composition being embedded between the first filaments;
and/or a hydrophilic factor, when a plurality of first filaments are provided, the hydrophilic factor being embedded between the first filaments.

8. A filter, **characterized in that** the filter comprises at least one water-holding fabric (10) of any one of claims 1 to 7, and when a plurality of water-holding fabrics (10) are provided, the plurality of water-holding fabrics (10) are connected in a stacked manner or spaced apart.

9. A humidifier, **characterized in that** the humidifier comprises a filter of claim 8, or at least one water-holding fabric (10) of any one of claims 1 to 7.

10. A method for manufacturing a water-holding fabric, **characterized in that** the method comprises:
connecting first weaving threads to form a first woven surface having a plurality of first air pores, wherein each of the first air pores is defined by a plurality of first weaving threads that are connected, and adjacent first weaving threads are connected to form first loops;
connecting second weaving threads to form a second woven surface having a plurality of second air pores, wherein each of the second air pores is defined by a plurality of second weaving threads that are connected, and adjacent second weaving threads are connected to form second loops; and
introducing connecting threads to the second loops through the first loops to connect the first woven surface and the second woven surface.
